(19) Europäisches Patentamt
European Patent Office
Office européen des brevets

(11) **EP 1 236 198 B1**

(12) **FASCICULE DE BREVET EUROPEEN**

(45) Date de publication et mention
de la délivrance du brevet:
**01.03.2006 Bulletin 2006/09**

(21) Numéro de dépôt: **00985352.4**

(22) Date de dépôt: **29.11.2000**

(51) Int Cl.:
***G10L 15/18*** *(2006.01)*

(86) Numéro de dépôt international:
**PCT/FR2000/003329**

(87) Numéro de publication internationale:
**WO 2001/041125 (07.06.2001 Gazette 2001/23)**

(54) **RECONNAISSANCE DE PAROLE AVEC UN MODELE DE LANGAGE COMPLEMENTAIRE POUR LES ERREURS TYPES DU DIALOGUE PARLE**

**SPRACHERKENNUNG MIT EINEM KOMPLEMENTÄREN SPRACHMODEL FÜR TYPISCHEN FEHLERN IM SPRACHDIALOG**

**SPEECH RECOGNITION WITH A COMPLEMENTARY LANGUAGE MODEL FOR TYPICAL MISTAKES IN SPOKEN DIALOGUE**

(84) Etats contractants désignés:
**DE ES FR GB IT**

(30) Priorité: **02.12.1999 FR 9915190**

(43) Date de publication de la demande:
**04.09.2002 Bulletin 2002/36**

(73) Titulaire: **Thomson Licensing
92100 Boulogne Billancourt (FR)**

(72) Inventeurs:
• **SOUFFLET, Frédéric,
Thomson Multimedia
F-92648 Boulogne (FR)**
• **DELAUNAY, Christophe,
Thomson Multimedia
F-92648 Boulogne (FR)**
• **TAZINE, Nour-Eddine,
Thomson Multimedia
F-92648 Boulogne (FR)**

(74) Mandataire: **Kohrs, Martin
Thomson multimedia
46, quai A. Le Gallo
92648 Boulogne Cedex (FR)**

(56) Documents cités:
• **TSUKADA H ET AL: "Reliable utterance segment recognition by integrating a grammar with statistical language constraints" SPEECH COMMUNICATION,ELSEVIER SCIENCE PUBLISHERS, AMSTERDAM,NL, vol. 26, no. 4, décembre 1998 (1998-12), pages 299-309, XP004153051 ISSN: 0167-6393**
• **LLOYD-THOMAS H ET AL: "AN INTEGRATED GRAMMAR/BIGRAM LANGUAGE MODEL USING PATH SCORES" DETROIT, MAY 9 - 12, 1995. SPEECH,NEW YORK, IEEE,US, 9 mai 1995 (1995-05-09), pages 173-176, XP000657958 ISBN: 0-7803-2432-3**
• **ROSE R C ET AL: "MODELING DISFLUENCY AND BACKGROUND EVENTS IN ASR FOR A NATURAL LANGUAGE UNDERSTANDING TASK" PHOENIX, AZ, MARCH 15 - 19, 1999,NEW YORK, NY: IEEE,US, 15 mars 1999 (1999-03-15), pages 341-344, XP000900128 ISBN: 0-7803-5042-1**
• **DATABASE INSPEC [en ligne] INSTITUTE OF ELECTRICAL ENGINEERS, STEVENAGE, GB; CSABAY K: "Catalogue cards, UDC number, dictionary entries" Database accession no. 6231820 XP002161480 & TUDOMANYOS ES MUSZAKI TAJEKOZTATAS, JAN. 1999, OMIKK, HUNGARY, vol. 46, no. 1, pages 12-32, ISSN: 0041-3917**

- **AMENGUAL J -C ET AL: "Simplifying language through error-correcting decoding" PROCEEDINGS ICSLP 96. FOURTH INTERNATIONAL CONFERENCE ON SPOKEN LANGUAGE PROCESSING (CAT. NO.96TH8206), PROCEEDING OF FOURTH INTERNATIONAL CONFERENCE ON SPOKEN LANGUAGE PROCESSING. ICSLP '96, PHILADELPHIA, PA, USA, 3-6 OCT. 1996, pages 841-844 vol.2, XP002161479 1996, New York, NY, USA, IEEE, USA ISBN: 0-7803-3555-4**

- **METEER M ET AL: "STATISTICAL LANGUAGE MODELING COMBINING N-GRAM AND CONTEXT-FREE GRAMMERS" MINNEAPOLIS, APR. 27 - 30, 1993,NEW YORK, IEEE,US, vol. -, 27 avril 1993 (1993-04-27), pages II-37-40, XP000427719 ISBN: 0-7803-0946-4**

## Description

L'invention concerne un dispositif de reconnaissance vocale comportant un modèle de langage défini à l'aide de blocs syntaxiques de différente nature, dits blocs rigides et blocs souples.

Les systèmes d'information ou de contrôle utilisent de plus en plus souvent une interface vocale pour rendre l'interaction avec l'utilisateur rapide et intuitive. Ces systèmes devenant plus complexes, les styles de dialogue supportés sont de plus en plus riches, et l'on rentre dans le domaine de la reconnaissance vocale continue à très large vocabulaire.

On sait que la conception d'un système de reconnaissance vocale continue à large vocabulaire suppose de produire un *Modèle de Langage* qui définit la probabilité pour qu'un mot donné du vocabulaire de l'application suive un autre mot ou groupe de mots, dans l'ordre chronologique de la phrase.

Ce modèle de langage doit reproduire le style d'élocution ordinairement employé par un utilisateur du système : hésitations, faux départs, changements d'avis, etc.

La qualité du modèle de langage utilisé influe de manière forte sur la fiabilité de la reconnaissance vocale. Cette qualité est le plus souvent mesurée par un indice appelé perplexité du modèle de langage, et qui représente schématiquement le nombre de choix que le système doit réaliser pour chaque mot décodé. Plus cette perplexité est basse, plus la qualité est bonne.

Le modèle de langage est nécessaire pour traduire le signal vocal en une suite textuelle de mots, étape souvent utilisée par les systèmes de dialogue. Il faut alors construire une logique de compréhension qui permette de comprendre la requête formulée vocalement pour y répondre.

Il existe deux méthodes standards pour produire des modèles de langage à large vocabulaire :

(1) La méthode statistique dite en N-gram, le plus souvent en bigram ou trigram, consiste à supposer que la probabilité d'occurrence d'un mot dans la phrase dépend uniquement des N mots qui le précèdent, indépendamment de son contexte dans la phrase.

Si l'on prend l'exemple du trigram pour un vocabulaire de 1000 mots, comme il existe $1000^3$ groupes possibles de trois éléments, il faudrait définir $1000^3$ probabilités pour définir le modèle de langage, ce qui occupe une taille mémoire considérable et une très grande puissance de calcul. Pour résoudre ce problème, les mots sont groupés en ensembles qui sont soit définis explicitement par le concepteur du modèle, soit déduits par des méthodes auto-organisatrices.

Ce modèle de langage est construit à partir d'un corpus de texte de façon automatique.

(2) La seconde méthode consiste à décrire la syntaxe au moyen d'une grammaire probabiliste, typiquement une grammaire non contextuelle définie grâce à un ensemble de règles décrites sous la forme dite Backus Naur Form ou BNF.

Les règles décrivant les grammaires sont le plus souvent écrites à la main, mais peuvent également être déduites de manière automatique. A ce titre, on peut se référer au document suivant :

"Basic methods of probabilistic context free grammars" par F. Jelinek, J.D. Lafferty et R.L. Mercer NATO ASI Series Vol. 75 pp. 345-359, 1992.

Les modèles précédemment décrits posent des problèmes spécifiques lorsqu'ils sont appliqués à des interfaces de systèmes en langage naturel :

Les modèles de langages de type N-grams (1) ne modélisent pas correctement les dépendances entre plusieurs sous-structures grammaticales distantes dans la phrase. Pour une phrase prononcée syntaxiquement correcte, rien ne garantit que ces sous-structures seront respectées au cours de la reconnaissance, ce qui fait qu'il est difficile de déterminer si tel ou tel sens, habituellement porté par une ou plusieurs structures syntaxiques précises, est véhiculé par la phrase.

Ces modèles sont adaptés à la dictée continue, mais leur application dans les systèmes de dialogue souffre des défauts mentionnés.

Par contre, il est possible, dans un modèle de type N-gram, de prendre en compte les hésitations et des répétitions, en définissant des ensembles de mots regroupant les mots qui ont effectivement été récemment prononcés.

Les modèles fondés sur des grammaires (2) permettent de modéliser correctement les dépendances à distance dans une phrase, et également de respecter des sous-structures syntaxiques précises. La perplexité du langage obtenu est souvent plus faible, pour une application donnée, que pour les modèles de type N-gram. Par contre, ils conviennent mal à la description d'un style de langage parlé, avec prise en compte d'hésitations, de faux départs, etc. En effet, ces phénomènes liés au langage parlé ne peuvent se prédire, il paraît donc difficile de concevoir des grammaires qui, de par leur nature, sont basées sur des règles de langage.

De plus, le nombre de règles nécessaires pour couvrir une application est très grand, ce qui rend difficile la prise en compte de nouvelles phrases à ajouter au dialogue prévu sans modification des règles existantes.

Le document "Reliable utterance segment recognition by integrating a grammar with statistical language constraints", Tsukada et al., Speech Communication, vol 26, no.4, decembre 1998, pages 299-309, divulgue deux modèles de langage : les deux modèles fonctionnent en même temps et cherchent des phrases qui satisfont à la fois les deux. Cette solution utilisant deux modèles de langage en parallèle nécessite une importante puissance de calcul

Le document "Integrated grammar/bigram language model using path scores " , Lloyd- Thomas et al, Detroit, Mai 9-12, 1995, Speech, New York , IEEE, US, pages 173-176, traite un modèle de langage constitué à la fois de données statistiques et de règles de grammaire. Le modèle de langage décrit nécessite l'utilisation d'un algorithme de reconnaissance spécialement conçu pour tirer le meilleur parti du modèle de langage.

Le moteur sémantique décrit dans le document " Modeling disfluency and background events in ASR for a natural language understanting task", Phoenix, AZ, March 15-19, 1999, New York , IEEE, US, pages 341-344 est constitué, d'une part d'un modèle acoustique, (dans le cas présent un HMM), et d'autre part, un modèle de langage, (dans la cas présent, un modèle à base de n-grams) de telle façon qu'un processeur de signal utilisant le modèle acoustique produit et un moteur de reconnaissance utilisant le modèle de langage produit puissent travailler ensemble pour produire un meilleur résultat. Ce document présente des techniques pour automatiser la production du modèle acoustique et du modèle de langage permettant de fonctionner ensemble correctement.

L'invention a pour objet un dispositif de reconnaissance vocale tel que revendiqué à la revendication 1. L'association des deux types de blocs syntaxiques permet de résoudre facilement les problèmes liés au langage parlé tout en bénéficiant de la modélisation des dépendances entre les éléments d'une phrase, modélisation facilement traitable à l'aide d'un bloc syntaxique rigide.

Selon une autre particularité, les réseaux n-gram contenus dans les seconds blocs souples contiennent des données permettant de reconnaître les phénomènes de langage parlé suivants : l'hésitation simple, la répétition simple, l'échange simple, le changement d'avis, le bafouillage.

Le modèle de langage selon l'invention autorise la combinaison des avantages des deux systèmes, en définissant deux types d'entités qui se combinent pour former le modèle de langage final.

On conserve pour certaines entités une syntaxe rigide et on leur associe un parseur, tandis que d'autres sont décrites par un réseau de type n-gram.

De plus, selon une variante de réalisation, on définit des blocs libres « déclenchés » par des blocs d'un des types précédents.

D'autres caractéristiques et avantages de l'invention apparaîtront à travers la description d'un mode de réalisation particulier non limitatif, explicité à l'aide des dessins joints parmi lesquels :

- la figure 1 est un diagramme d'un système de reconnaissance vocale,
- la figure 2 est un diagramme OMT définissant un bloc syntaxique selon l'invention.

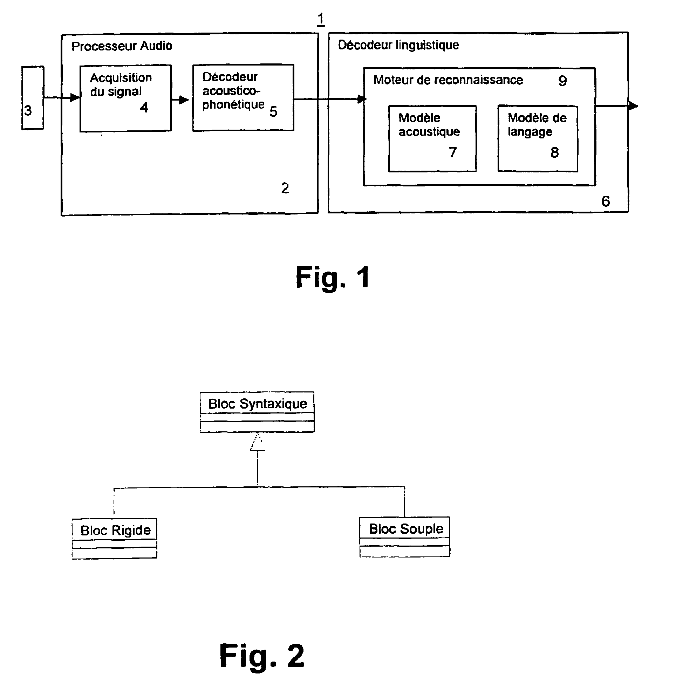

La figure 1 est un diagramme bloc d'un exemple de dispositif 1 de reconnaissance de la parole. Ce dispositif comporte un processeur 2 du signal audio réalisant la numérisation d'un signal audio provenant d'un microphone 3 par l'intermédiaire d'un circuit 4 d'acquisition du signal. Le processeur traduit également les échantillons numériques en symboles acoustiques choisis dans un alphabet prédéterminé. Il comporte à cet effet un décodeur acoustico-phonétique 5. Un décodeur linguistique 6 traite ces symboles dans le but de déterminer, pour une séquence A de symboles, la séquence W de mots la plus probable, étant donné la séquence A. Le décodeur linguistique utilise un modèle acoustique 7 et un modèle de langage 8 mis en oeuvre par un algorithme de recherche par hypothèse 9. Le modèle acoustique est par exemple un modèle dit 'Markov caché ('Hidden Markov model' ou HMM). Le modèle de langage mis en oeuvre dans le présent exemple de réalisation est basé sur une grammaire décrite à l'aide de règles de syntaxe de forme Backus Naur. Le modèle de langage est utilisé pour soumettre des hypothèses à l'algorithme de recherche. Ce dernier, qui est le moteur de reconnaissance proprement dit, est pour ce qui du présent exemple un algorithme de recherche basé sur un algorithme de type Viterbi et appelé 'n-best'. L'algorithme de type n-best détermine à chaque étape de l'analyse d'une phrase les n séquences de mots les plus probables. En fin de phrase, la solution la plus probable est choisie parmi les n candidats.

Les notions du paragraphe ci-dessus sont en soi bien connues de l'Homme du Métier, mais des informations concernant en particulier l'algorithme n-best sont donnés dans l'ouvrage :

"Statistical methods for speech recognition" par F. Jelinek, MIT Press 1999 ISBN 0-262-10066-5 pp. 79-84. D'autres algorithmes peuvent également être mis en oeuvre. Notamment, d'autres algorithmes de type 'Beam Search' (Recherche par faisceau), dont l'algorithme 'n-best' est un exemple.

Le modèle de langage de l'invention utilise des blocs syntaxiques qui peuvent être de l'un des deux types illustrés par la figure 2: bloc de type rigide, bloc de type souple.

Les blocs syntaxiques rigides sont définis grâce à une syntaxe de type BNF, avec cinq règles d'écriture :

(a) <symbole A> = <symbole B> | <symbole C> (symbole ou)

(b) <symbole A> = <symbole B> <symbole C> (symbole et)

(c) <symbole A> = <symbole B>? (symbole facultatif)

(d) <symbole A> = "mot lexical" (affectation lexicale)

(e) <symbole A> = P{<symbole B>, <symbole C> ,... <symbole X>} (symbole B > <symbole C>)

( .....)

(symbole I > <symbole J>)

(toutes les permutations sans répétition des symboles cités, avec contraintes : le symbole B doit apparaître avant le symbole C, le symbole I avant le symbole J ...)

La mise en oeuvre de la règle (e) est expliquée plus en détail dans la demande de brevet français n° 9915083 s'intitulant 'Dispositif de reconnaissance vocale mettant en oeuvre une règle syntaxique de permutation' déposée au nom de THOMSON multimedia le 30 novembre 1999.

Les blocs souples sont définis soit grâce à la même syntaxe BNF que précédemment, soit comme une liste de tronçons de phrase, soit par une liste de vocabulaire et les réseaux n-gram correspondants, soit par la combinaison des trois. Mais ces informations sont traduites systématiquement en un réseau n-gram et, si la définition a été faite par un fichier BNF, il n'est pas garanti que seules les phrases syntaxiquement correctes vis-à-vis de cette grammaire puissent être produites.

Un bloc souple est donc défini par une probabilité P(S) d'apparition de la suite S de n mots $w_i$ de la forme (dans le cas d'un trigram) :

$$P(S) = \Pi_{1,n}\, P(w_i)$$

Avec $P(w_i) = P(w_i|w_{i-1},w_{i-2})$

Pour chaque bloc souple, il existe un mot spécial de sortie de bloc qui apparaît dans le réseau n-gram de la même façon qu'un mot normal, mais qui n'a pas de trace phonétique et qui autorise à sortir du bloc.

Une fois que ces bloc syntaxiques ont été définis (de type n-gram ou de type BNF), ils peuvent à nouveau être utilisés comme atomes pour des constructions d'ordre supérieur :

Dans le cas d'un bloc BNF, les blocs de niveaux inférieurs peuvent être utilisés en lieu et place de l'affectation lexicale ainsi que dans les autres règles. Dans le cas d'un bloc de type n-gram, les blocs de niveau inférieur sont utilisés en lieu et place des mots $w_l$ , et donc plusieurs blocs peuvent s'enchaîner avec une probabilité donnée.

Une fois le réseau n-gram défini, il est incorporé dans la grammaire BNF précédemment décrite comme un symbole particulier. On peut incorporer autant de réseaux n-gram que nécessaire dans la grammaire BNF. Les permutations utilisées pour la définition d'un bloc de type BNF sont traitées dans l'algorithme de recherche du moteur de reconnaissance par des variables de type booléen utilisées pour diriger la recherche lors de l'élagage classiquement mis en oeuvre dans ce type de situation.

On voit que le symbole de sortie de bloc souple peut aussi être interprété comme un symbole de remontée au bloc supérieur, qui peut être lui-même un bloc souple ou un bloc rigide.

### • Mise en place de déclencheurs

Le formalisme précédent n'est encore pas suffisant pour décrire le modèle de langage d'une application de dialogue homme-machine à large vocabulaire. Selon une variante de réalisation, on y ajoute un mécanisme de déclenchement ou 'trigger'. Le déclencheur permet de donner du sens à un mot ou à un bloc, afin de l'associer à certains éléments. Par exemple, supposons que le mot « documentaire » est reconnu dans le contexte d'un guide électronique de programmes audiovisuels. On peut associer à ce mot une liste de mots tels que « animalier, sportif, touristique,.... ». Ces mots ont un sens pour « documentaire », et on peut s'attendre à ce que l'un d'entre eux soit associé à celui-ci.

Pour cela, nous noterons <bloc> un bloc précédemment décrit et ::<bloc> la réalisation de ce bloc par une de ses instances au cours de l'algorithme de reconnaissance, c'est-à-dire sa présence dans la chaîne actuellement décodée dans l'algorithme n-best search de recherche.

Par exemple, on pourrait avoir :

<souhait> = j'aimerais aller à |je veux me rendre à.
<ville> = Lyon | Paris | Londres | Rennes.
<phrase> = <souhait> <ville>

Alors ::<souhait> sera: 'j'aimerais aller à' pour la partie des chemins envisagé par l'algorithme de Viterbi pour les possibilités :

j'aimerais aller à Lyon
j'aimerais aller à Paris
j'aimerais aller à Londres
j'aimerais aller à Rennes
et sera égal à 'je veux me rendre à' pour les autres.

Les déclencheurs du modèle de langage sont alors définis de la manière suivante :

Si <symbole>:: appartient à un sous groupe donné des réalisations possibles du symbole en question, alors un autre symbole <T(symbole)>, qui est le symbole cible du symbole actuel, est soit réduit à une sous partie de son domaine d'extension normal, c'est-à-dire à son domaine d'extension si le déclencheur n'est pas présent dans la chaîne de décodage, (déclencheur réducteur), soit activé et disponible, avec un facteur de branchement non nul en sortie de chaque bloc syntaxique appartenant au groupe dit des 'candidats activeurs' (déclencheur activeur)

Notons que :

Il n'est pas nécessaire que tous les blocs décrivent un processus de déclenchement.

La cible d'une symbole peut être ce symbole lui-même, s'il est utilisé de manière multiple dans le modèle de langage.

Il peut n'exister, pour un bloc, qu'une sous partie de son ensemble de réalisation qui soit composante d'un mécanisme de déclenchement, le complémentaire n'étant pas lui-même un déclencheur.

La cible d'un déclencheur activeur peut être un symbole facultatif.

Les mécanismes de déclenchement réducteurs permettent de traiter, dans notre modèle de langage de blocs, les répétitions cohérentes de thèmes. Des informations supplémentaires sur la notion de déclencheur peuvent être trouvées dans le document de référence déjà cité, notamment pages 245-253.

Les mécanismes de déclenchement activeurs permettent de modéliser certains groupes syntaxiques libres, dans les langages fortement infléchis.

Il faut noter que les déclencheurs, leurs cibles et la restriction sur les cibles, peuvent être déterminés manuellement ou obtenus par un processus automatique, par exemple par une méthode de maximum d'entropie.

• **Prise en compte du langage parlé :**

La construction précédemment décrite définit la syntaxe du modèle de langage, sans prise en compte des hésitations, reprises, faux départs, changement d'avis, etc., qui sont attendus dans un style parlé. Les phénomènes liés au langage parlé sont difficilement reconnaissables par une grammaire, du fait de leur nature non-prédictible. Les réseaux n-gram sont plus adaptés pour reconnaître ce genre de phénomène.

Ces phénomènes liés au langage parlé peuvent être classés en cinq catégories :

**L'hésitation simple** : je voudrais *(heuuuu...silence)* aller à Lyon.

La répétition simple, dans laquelle une partie de la phrase, (souvent les déterminants et les articles, mais parfois des morceaux entiers de phrase), sont purement et simplement répétés : je voudrais aller à *(à à à)* Lyon.

**L'échange simple,** au cours de laquelle une formulation est remplacée, en cours de route, par une formulation de même sens, mais syntaxiquement différente : je voudrais me rendre *(heuuuu aller)* à Lyon

**Le changement d'avis :** une partie de phrase est corrigée, avec un sens différent, au cours de l'énoncé : je voudrais aller à Lyon, *(heuuuu* à *Paris).*

**Le bafouillage** : je voudrais aller à *(Praris Heuuu)* Paris.

Les deux premiers phénomènes sont les plus fréquents : environ 80% des hésitations sont classées dans l'un de ces groupes.

Le modèle de langage de l'invention traite ces phénomènes de la manière suivante :

**Hésitation simple :**

L'hésitation simple est traitée par création de mots associés aux traces phonétiques marquant l'hésitation dans la langue considérée, et qui sont traités de la même façon que les autres vis-à-vis du modèle de langage (probabilité d'apparition, d'être suivi d'un silence, etc.), et dans les modèles phonétiques (coarticulation, etc.).

On a remarqué que des hésitations simples se produisent à des endroits précis d'une phrase, par exemple : entre le premier verbe et le second verbe. Pour les traiter, un exemple de règle d'écriture conforme à la présente invention consiste :

<Groupe verbal> = <premier verbe><réseau n-gram><second verbe>

**Répétition simple :**

La répétition simple est traitée par une technique de cache qui contient la phrase analysée actuellement à cette étape du décodage. Il existe, dans le modèle de langage, une probabilité fixe pour qu'il y ait branchement dans le cache. La sortie de cache est connectée au modèle de langage par bloc, avec reprise de l'état atteint avant l'activation du cache.

Le cache contient en fait le dernier bloc du morceau de phrase en cours, ce bloc peut être répété. Par contre, si c'est le bloc avant le dernier, il ne peut être traité par un tel cache, il faut alors revoir entièrement la phrase.

Lorsqu'il s'agit d'une répétition sur des articles, et pour les langues ou cela est pertinent, le cache comporte l'article et ses formes associées, en changement de nombre et de genre.

En français par exemple, le cache pour **"de"** contient **"du"** et **"des"**. La modification de genre et de nombre est en effet fréquente.

**Echange simple et changement d'avis :**

L'échange simple est traité par la création de groupes de blocs associés entre lesquels un échange simple est possible, c'est-à-dire qu'il existe une probabilité pour qu'il y ait sortie du bloc et branchement au début d'un des autres blocs du groupe.

Pour l'échange simple, la sortie de bloc est couplée avec un déclenchement, dans les blocs associés au même groupe, de sous parties de même sens.

Pour le changement d'avis, soit il n'y a pas de déclenchement, soit il y a déclenchement sur les sous parties de sens distinct.

Il est également possible de n'avoir pas recours au déclenchement, et de classer l'hésitation par analyse à posteriori.

**Bafouillage :**

Il est traité comme une répétition simple.
L'avantage de ce mode de traitement des hésitations (sauf pour l'hésitation simple) est que la création des groupes associés renforce le taux de reconnaissance par rapport à une phrase sans hésitation, à cause de la redondance d'information sémantique présente. Par contre, la charge de calcul est plus importante.

**Références :**

(1) Self-Organized language modeling for speech recognition. F.Jelinek. Readings in speech recognition. P 450-506, Morgan Kaufman Publishers, 1990

(2) Basic methods of probabilistic context free grammars. F. Jelinek,J.D. Lafferty, R.L. Mercer NATO ASI Series Vol 75 P 345-359, 1992

(3) Trigger-Based language models : A maximum entropy approach. R. Lau, R. Rosenfeld, S. Roukos. Proceedings IEEE ICASSP, 1993

(4) Statistical methods for speech recognition F. Jelinek MIT Press ISBN 0-262-10066-5 pp 245-253

**Revendications**

1. Dispositif de reconnaissance vocale (1) comportant un processeur audio (2) pour l'acquisition d'un signal audio, et un décodeur linguistique (6) pour déterminer une séquence de mots correspondant au signal audio, le décodeur comportant un modèle de langage (8), **caractérisé en ce que** le modèle de langage (8) est déterminé par un premier ensemble d'au moins un bloc syntaxique rigide et un second ensemble d'au moins un bloc syntaxique souple, le premier ensemble d'au moins un bloc syntaxique rigide étant défini par une grammaire de type BNF, le second ensemble d'au moins un bloc syntaxique souple étant défini par un ou plusieurs réseaux n-gram, chaque bloc souple étant incorporé dans la grammaire BNF comme un symbole particulier et contenant un mot spécifique de sortie qui autorise à sortir du bloc.

2. Dispositif selon la revendication 1, **caractérisé en ce que** les données des réseaux n-gram sont produites à l'aide d'une grammaire ou d'une liste de tronçons de phrase.

3. Dispositif selon la revendication 1 ou 2, **caractérisé en ce que** le réseau n-gram contient des données correspondant à un ou plusieurs des phénomènes suivants : l'hésitation simple, la répétition simple, l'échange simple, le changement d'avis, le bafouillage.

**Patentansprüche**

1. Spracherkennungsvorrichtung (1) mit einem Audioprozessor (2) zur Gewinnung eines Audiosignals und einem linguistischen Decoder (6) zur Bestimmung einer dem Audiosignal entsprechenden Wortfolge, wobei der Decoder ein Sprachmodell (8) enthält, **dadurch gekennzeichnet, dass** das Sprachmodell (8) durch eine erste, aus mindestens einem starren Syntaxblock bestehende Anordnung und eine zweite, aus mindestens einem flexiblen Syntaxblock bestehende Anordnung festgelegt ist, wobei die erste, aus mindestens einem starren Syntaxblock bestehende Anordnung durch eine BNF-artige Grammatik definiert ist, die zweite, aus mindestens einem flexiblen Syntaxblock bestehende Anordnung durch ein oder mehrere n-gram-Netzwerke definiert ist, wobei jeder flexible Block in die BNF-Grammatik als einzelnes Symbol eingebettet ist und ein.spezifisches Ausgangswort enthält, das den Austritt aus dem Block zulässt.

2. Vorrichtung nach Anspruch 1, **dadurch gekennzeichnet, dass** die Daten der n-gram-Netzwerke mit Hilfe einer Grammatik oder einer Liste von Satzabschnitten erzeugt werden.

3. Vorrichtung nach Anspruch 1 oder 2, **dadurch gekennzeichnet, dass** das n-gram-Netzwerk Daten enthält, welche einem oder mehreren der folgenden Erscheinungen entsprechen: einfaches Zögern, einfache Wiederholung, einfacher Austausch, Meinungsänderung, Gestammel.

**Claims**

1. Speech recognition device (1) comprising an audio processor (2) for the acquisition of an audio signal and a linguistic decoder (6) for determining a sequence of words corresponding to the audio signal, the decoder comprising a language model (8), **characterized in that** the language model (8) is determined by a first set of at least one rigid syntactic block and a second set of at least one flexible syntactic block, the first set of at least one rigid syntactic block being defined by a BNF type grammar, the second set of at least one flexible syntactic block is defined by one or more n-gram networks, each flexible block being incorporated into the BNF grammar as a particular symbol and containing a specific block exit word which permits exit from the block.

2. Device according to Claim 1, **characterized in that** the data of the n-gram networks are produced with the aid of a grammar or of a list of phrases.

3. Device according to Claims 1 or 2, **characterized in that** the n-gram network contains data corresponding to one or more of the following phenomena: simple hesitation, simple repetition, simple exchange, change of mind, mumbling.

Processeur Audio

Décodeur linguistique

| Acquisition du signal 4 | Décodeur acoustico-phonétique 5 |

3

2

Moteur de reconnaissance 9

| Modèle acoustique 7 | Modèle de langage 8 |

6

1

## Fig. 1

Bloc Syntaxique

Bloc Rigide

Bloc Souple

## Fig. 2